**Europäisches Patentamt**

**European Patent Office**

**Office européen des brevets**

(11) Veröffentlichungsnummer : **0 280 656 B1**

(12) **EUROPÄISCHE PATENTSCHRIFT**

(45) Veröffentlichungstag der Patentschrift :
05.02.92 Patentblatt 92/06

(51) Int. Cl.⁵ : **A01L 7/02**

(21) Anmeldenummer : **88810112.8**

(22) Anmeldetag : **24.02.88**

(54) **Vorrichtung zur Verhinderung von Schneeklumpenbildung innerhalb des Hufeisens eines beschlagenen Hufes.**

(30) Priorität : **24.02.87 CH 699/87**

(43) Veröffentlichungstag der Anmeldung :
**31.08.88 Patentblatt 88/35**

(45) Bekanntmachung des Hinweises auf die
Patenterteilung :
**05.02.92 Patentblatt 92/06**

(84) Benannte Vertragsstaaten :
**AT CH DE FR GB IT LI NL SE**

(56) Entgegenhaltungen :
**DE-A- 2 402 321**
**DE-C- 707 239**
**FR-A- 809 839**

(73) Patentinhaber : **Meier, Johann**
**Im Töbli**
**CH-8332 Sennhof bei Russikon (CH)**

(72) Erfinder : **Meier, Johann**
**Im Töbli**
**CH-8332 Sennhof bei Russikon (CH)**

(74) Vertreter : **Feldmann, Clarence Paul et al**
**c/o Patentanwaltsbüro FELDMANN AG**
**Postfach Kanalstrasse 17**
**CH-8152 Glattbrugg (CH)**

EP 0 280 656 B1

## Beschreibung

Vorwiegend auf feuchtem und nassem Schnee bilden sich innerhalb des Hufeisens Schneeklumpen. Diese Klumpen können mit jedem Schritt wachsen, bis sie das Hufeisen überragen. Es versteht sich, dass das Tier an seinen Hufen dann keine ebene Auflagefläche mehr hat und daher in seinem Gang behindert ist. Die Trittsicherheit wird erheblich eingeschränkt. Es besteht dauernd die Gefahr des Ausgleitens, was gar zu Stürzen führen kann. Abgesehen von der Verletzungsgefahr bei Stürzen fügen solche Stollen dem Tier beim Gehen unter Umständen Schmerzen zu, besonders, wenn der Schneeklumpen Eisstücke enthält.

Es sind verschiedene Vorrichtungen bekannt, welche den genannten Problemen abhelfen sollen.

Die DE-A-2'402'321 zeigt in den Figuren 1-3 eine derartige Vorrichtung mit einer in einem beschlagenen Huf einlegbaren Einlage, die aus einem Federstahlbügel besteht, der mit einem Gummischlauch überzogen ist. Die aus dem Schlauch herausragenden Enden sind zu Oesen gebogen, die dem Einlegen und Herausnehmen der Einlage dient. Diese Einlage ist lediglich durch Federkraft gehalten und es wird bezweifelt, ob er dadurch genügend Halt findet. Zum besseren Halt muss vor dem Beschlagen die Hufsohle mit einer Rinne versehen werden und die innere zum Huf hin gerichtete Seite des Hufeisens abgeschrägt werden. Die Federkraft des Stahlbügels übt dann aber einen ständigen Druck auf den Huf aus. Dies könnte auch zum Lockern der Nägel im Huf führen, so dass nach dem Entfernen der Einlage das Hufeisen nicht mehr fest sitzt. Aus der DE-C-707'239 ist ein verstellbarer Halter für Hufeiseneinlagen bekannt. Er besteht aus zwei in der Länge verstellbaren und spreizbaren Schenkel, deren Enden abgekröpft sind und mittels Schraubstollen am Hufeisen befestigbar sind. Am Gelenkende ist einer der beiden Schenkel mit einem vorstehenden Teil versehen, der in montiertem Zustand zwischen den Huf und dem Hufeisen gesteckt wird. Wohlbemerkt handelt es sich hier nur um einen Halter für die eigentliche Einlage. Die Einlage oder der Gummi wird mittels Nägeln am Halter befestigt. Die Nägel durchsetzen, die in den Schenkeln angebrachten Lochreihen und sind an der Aussenseite der Einlage umgebogen. Sowie die umgebogenen Enden der Nägel durchgeschlissen sind, besteht die Gefahr, dass sie durch die Einlage nach innen dringen und den Huf schmerzhaft verletzen.

Die Aufgabe der vorliegenden Erfindung ist es, eine Vorrichtung zur Verhinderung von Schneeklumpenbildung innerhalb des Hufeisens eines beschlagenen Hufes zu schaffen, welche die vorgängig genannten Nachteile beseitigt und lösbar befestigbar ist, so dass sie auch vom Nicht-Hufschmied eingesetzt werden kann.

Diese Aufgabe wird gelöst durch eine Vorrichtung nach dem Oberbegriff des Patentanspruches 1, die sich durch die im kennzeichnenden Teil genannten Merkmale auszeichnet.

Nachfolgend wird ein vorteilhaftes Ausführungsbeispiel anhand einer Zeichnung dargestellt.

Es zeigt :

Figur 1    die Vorrichtung angelegt an ein Hufeisen in perspektivischer Ansicht.
Figur 2    eine Variante der Vorrichtung für sich allein.

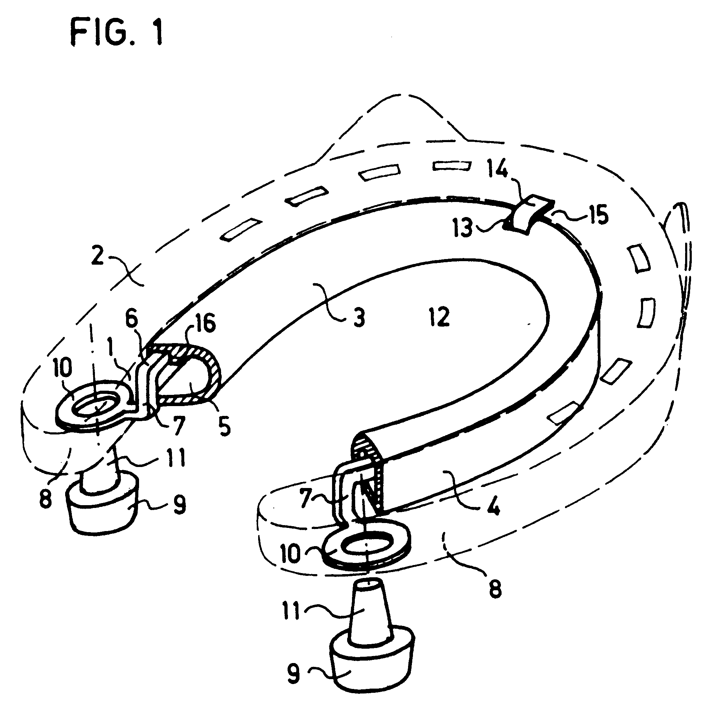

Die erfindungsgemässe Vorrichtung ist in Figur 1 satt an die Innenseite 1 des Hufeisens 2 angelegt. Die gummielastische Einlage 3 ist in der gezeigten Ausführung ein Hohlprofil 3, das eine zu diesem Zweck ebene Längsseite 4 aufweist. Wie die vorteilhafte Ausführung des Hohlprofils 3 in der Darstellung zeigt, bedeckt diese ebene Seite 4 die Innenseite 1 des Hufeisens 2 in ihrer vollen Höhe. Damit bleibt kein Rand mehr unbedeckt, an welchem sich Eis und Schnee ansetzen könnte. Es sind jedoch auch andere Profile denkbar, die nicht unbedingt die ganze Innenseite 1 abdecken. Der freie Raum im Hohlprofil 3 ermöglicht die Deformierbarkeit des Profils 3. Die Wandstärke ist jedoch so gewählt, dass das Profil 3 nach dem Zusammendrücken wieder kräftig in die ursprüngliche Form zurückkommt. Die Schneeklumpenbildung wird dadurch wirksam verhindert. Tritt das Tier zum Beispiel auf balligen Schnee, welcher besonders zur Klumpenbildung neigt, so wird der Schnee im Bereich innerhalb des Hufeisens zusammengedrückt. Gleichzeitig aber drückt dieser Schnee auch das Hohlprofil 3 unter dem Gewicht des Tieres zusammen. Sobald das Tier den Huf wieder anhebt, kommt das Hohlprofil 3 wieder in seine ursprüngliche Form zurück und sprengt dadurch den Schnee ab. Innerhalb eines solchen Hohlprofils 3, welches am besten aus einem widerstandsfähigen, gummielastischen Material besteht, ist auf der Innenseite 5 eine Nut 16 vorhanden, in welche die Halterung 6 eingelegt ist. Diese Nut 16 verstärkt den Halt der ganzen Vorrichtung und hilft, einen einwandfreien Pass-Sitz zu gewährleisten. Entlang dem Inneren 5 des Hohlprofils 3 ist die Halterung 6 hier in Form eines Metallbügels 6 ausgeführt. Dessen herausragende Endteile 7 sind so geformt, dass sie auf der bodenseitigen Unterseite 8 des Hufeisens 2 zu den dort vorhandenen Löchern führen, welche zum Einsetzen von Stollen 9 vorgesehen sind. An den Enden sind Rundösen 10 vorhanden. Zur Montage der Vorrichtung wird diese ins Hufeisen 2 eingelegt und die Rundösen 10 werden durch das Einsetzen der Stollen 9 festgeklemmt. Die Stollen 9 selber werden mit ihren konischen Spitzen 11 in die vorgesehenen Löcher im Hufeisen 2 eingeschlagen, oder wenn es sich um Schraubstollen handelt, eingeschraubt. Damit die Vorrichtung auch im vorderen Bereich 12 sicher am Hufeisen 2 gehalten ist, ist das Profil 3 dort mit einer Ausnehmung 13 versehen, durch die eine fest mit den Bügel 6 verbundene Zunge 14 herausragt, welche zwischen den oberen Rand 15 der Hufeisen-Innenseite 1 und dem Huf geschoben wird.

Die Einlage 3 kann aber auch ein Vollprofil aus gummielastischem Material sein. Dieses Material wird wegen seiner Elastizität beim Auftreten des Tieres vom Schnee ebenfalls zusammengedrückt und geht nach dem Abheben des Hufes wieder in seine ursprüngliche Form zurück. Dabei wird allfällig festsitzender Schnee abgesprengt.

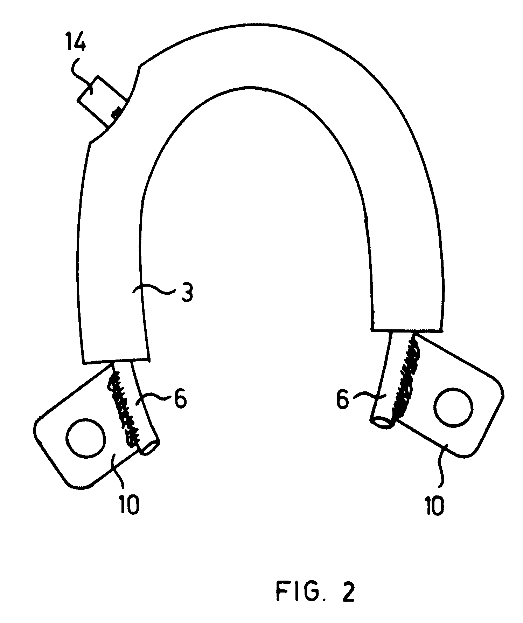

Eine preiswerte Lösung nach Figur 2 sieht vor, die Halterung 6 aus einem runden Stahldraht 6 zu fertigen, so dass die Einlage 3 ein einfacher darüber gestülpter oder aufgummierter Gummischlauch sein kann. Es genügt dann, die Oesen 10 in Form von einfachen Laschen in der Gebrauchslage unten am Draht 6 anzuschweissen, während die Zunge 14 oben am Draht 6 angeschweisst wird. Es ist vorteilhaft, wenn die Zunge 14 etwas seitlich versetzt angeordnet ist, weil dann bei den ständigen Schlägen in Laufrichtung keine Verletzungsgefahr des Pferdehufes besteht.

Die erfindungsgemässe Vorrichtung bewirkt keine Nachteile für den Beschlag und die Hufe. Sie kann von jedermann mit Leichtigkeit und je nach Bedarf an den Hufeisen befestigt und wieder entfernt werden.


## Patentansprüche

1. In einen beschlagenen Huf einsetzbare Vorrichtung zur Verhinderung von Schneeklumpenbildung innerhalb des Hufeisens (2), bestehend aus einer hufeisenförmigen gummieelastischen Einlage mit einem im inneren derselben verlaufenden Bügel, der so geformt ist, dass die Aussenseite der Einlage an der Innenseite des Hufeisens anliegt, dass der Bügel (6) aus beiden Enden der Einlage herausragt, dass die Bügelenden mit Oesen (10) versehen sind, dadurch gekennzeichnet, dass die Oesen derart angeordnet sind, dass sie bei eingesetzter Einlage auf die bodenseitige Unterseite des Hufeisens (2) zu liegen kommen, wo sie mittels einzuschlagenden oder einzuschraubenden Stollen (9) am Hufeisen befestigt sind, und dass im vorderen Bereich (12) der Einlage eine mit dem Bügel (6) fest verbundene aus der Einlage herausragenden Zunge (14) versehen ist, welche auf der Oberseite (15) des Hufeisens auflegbar ist.

2. Vorrichtung nach Anspruch 1, dadurch gekennzeichnet, dass die gummieelastische Einlage (3) die Form eines den Bügel (6) umgebenden Schlauches hat.

3. Vorrichtung nach Anspruch 1, dadurch gekennzeichnet, dass die gummieelastische Einlage ein den Bügel (6) umschliessendes Vollprofil ist.

4. Vorrichtung nach Anspruch 1, dadurch gekennzeichnet, dass der Bügel (6) aus Metall oder Kunststoff gefertigt ist.

5. Vorrichtung nach Anspruch 1, dadurch gekennzeichnet, dass die Oesen (10) einstückig mit dem Bügel (6) verbunden sind.

6. Vorrichtung nach Anspruch 2, dadurch gekennzeichnet, dass die Einlage (3) in seiner oberen oder äusseren Innenseite eine Nut (16) aufweist, in welche der Bügel (6) formschlüssig gehalten ist.

7. Vorrichtung nach Anspruch 4, dadurch gekennzeichnet, dass der Bügel (6) aus Federstahl gefertigt ist.

8. Vorrichtung nach Anspruch 1, dadurch gekennzeichnet, dass die Löcher der Oesen (10) den gleichen Durchmesser, wie die Stollenlöcher im Hufeisen (2) aufweisen.

9. Vorrichtung nach Anspruch 1, dadurch gekennzeichnet, dass die Zunge (14) bezüglich der Hufeisen-Mittellinie seitlich versetzt angeordnet ist (Figur 2).


## Claims

1. Device insertable in a shod hoof for preventing the formation of snow lumps within the horseshoe (2), comprising a horseshoe-shaped, rubber elastic insert with a bow-shaped member in the interior thereof and which is shaped in such a way that the outside of the insert engages on the inside of the horseshoe, the bow-shaped member (6) projects from both ends of the insert and the ends of said member are provided with rings (10), characterized in that the rings are arranged in such a way that when the insert is inserted they come to rest on the bottom-side underside of the horseshoe (2), where they are fixed to the latter by means of the calks (9) to be hammered or screwed in and that in the front region (12) of the insert is provided a tongue (14), which projects from the insert and which is fixed to the bow-shaped member (6) and which can be applied to the top (15) of the horseshoe.

2. Device according to claim 1, characterized in that the rubber elastic insert (3) is in the form of a hose surrounding the bow-shaped member (6).

3. Device according to claim 1, characterized in that the rubber elastic insert is a solid profile surrounding the bow-shaped member (6).

4. Device according to claim 1, characterized in that the bow-shaped member (6) is made from metal or plastic.

5. Device according to claim 1, characterized in that the rings (10) are connected in one piece to the bow-shaped member (6).

6. Device according to claim 2, characterized in that the insert is provided in its upper or outer inside with a groove (16), in which the bow-shaped member (6) is positively secured.

7. Device according to claim 4, characterized in that the bow-shaped member (6) is made from spring steel.

8. Device according to claim 1, characterized in that the holes in the rings (10) have the same diameter as the calk holes in the horseshoe (2).

9. Device according to claim 1, characterized in that the tongue (14) is laterally displaced with respect to the horseshoe axis (fig. 2).


**Revendications**

1. Dispositif insérable dans un sabot de cheval ferré pour éviter la formation d'agglomérats de neige à l'intérieur du fer à cheval (2), constitué d'un insert élastique en forme de fer à cheval comportant un étrier s'étendant à l'intérieur dudit insert dont la forme est telle que le côté extérieur de l'insert s'applique sur le côté intérieur du fer à cheval, que ledit étrier (6) fait saillie en dehors des deux extrémités de l'insert, que les extrémités de l'étrier sont munies d'oeillets (10), caractérisé par le fait que lesdits oeillets (10) sont disposés de manière à venir se situer du côté inférieur, du côté du sol, du fer à cheval (2) lorsque l'insert est mis en place, endroit où ils sont fixés sur le fer à cheval au moyen de crampons (9) à clouer ou à visser, et par le fait que dans la zone antérieure (12) de l'insert est prévue une languette (14) faisant saillie de l'insert et étant reliée solidement à l'étrier (6), ladite languette pouvant s'appliquer sur le côté supérieur (15) du fer à cheval.

2. Dispositif selon la revendication 1, caractérisé par le fait que l'insert élastique (3) a la forme d'un tuyau souple entourant l'étrier (6).

3. Dispositif selon la revendication 1, caractérisé par le fait que l'insert élastique est un profilé plan entourant l'étrier (6).

4. Dispositif selon la revendication 1, caractérisé par le fait que l'étrier (6) est fabriqué en métal ou en matière plastique.

5. Dispositif selon la revendication 1, caractérisé par le fait que les oeillets (10) sont reliés en une pièce avec l'étrier (6).

6. Dispositif selon la revendication 2, caractérisé par le fait que l'insert (3) présente dans sa partie intérieure, supérieure ou extérieure, une rainure (16) dont la forme épouse celle de l'étrier et à l'intérieur de laquelle l'étrier (6) est maintenu.

7. Dispositif selon la revendication 4, caractérisé par le fait que l'étrier (6) est réalisé en acier à ressort.

8. Dispositif selon la revendication 1, caractérisé par le fait que les trous des oeillets (10) présentent le même diamètre que les trous des crampons fixés dans le fer à cheval (2).

9. Dispositif selon la revendication 1, caractérisé par le fait que la languette (14) est disposée de manière latéralement décalée par rapport à la ligne médiane du fer à cheval (figure 2).

FIG. 1

FIG. 2